# FASCICULE DE BREVET EUROPEEN

(11) **EP 2 702 188 B1**
(45) Date de publication et mention de la délivrance du brevet: **18.03.2015**
(21) Numéro de dépôt: 13710021.0
(22) Date de dépôt: 18.01.2013
(51) Int. Cl.: C04B 35/626, C04B 35/634, C04B 35/01, C04B 35/101, C04B 35/107, C25C 3/08, C25C 3/18

(54) **CUVE D'ÉLECTROLYSE**
ELEKTROLYSEZELLE
ELECTROLYTIC CELL

(30) Priorité: 20.01.2012 FR 1250595
(43) Date de publication de la demande: 05.03.2014
(60) Demande divisionnaire: 14182339.3
(73) Titulaire: Saint-Gobain Centre de Recherches et d'Etudes Européen, 92400 Courbevoie (FR)
(72) Inventeur: JORGE, Eric, F-84210 Les Valayans (FR); FRANCY, Olivier, F-84800 L'isle Sur La Sorgue (FR); PANAGIOTIS, Olivier, F-84300 Cavaillon (FR)
(74) Mandataire: Nony
(86) Numéro de dépôt international: PCT/IB2013/050492
(87) Numéro de publication internationale: WO 2013/108233

(56) Documents cités:
- EP-A1- 0 132 031
- EP-A1- 0 552 402
- EP-A2- 0 150 007
- FR-A1- 2 918 659
- GB-A- 1 007 864
- US-A- 4 737 254
- US-B1- 6 258 247

## Description

### DOMAINE TECHNIQUE

L'invention concerne un bloc réfractaire, notamment pour la construction d'une cuve d'électrolyse de l'aluminium, et une cuve comportant un tel bloc.

### ARRIERE-PLAN TECHNOLOGIQUE

Comme représenté sur la figure 1, de l'aluminium métal 2 peut être produit industriellement par électrolyse d'alumine en solution dans un bain 10 à base de cryolithe fondue. Le bain d'électrolyte 10 est classiquement contenu dans une cuve d'électrolyse 12. La cuve 12 comporte une paroi latérale 14 et un fond 16. Le fond 16 est composé de blocs de fond 17 réfractaires et de blocs cathodiques 24 et, en partie basse, de blocs isolants. La paroi latérale 14 est formée au moyen de blocs réfractaires latéraux 18, ceinturés d'une enveloppe métallique 20, ou « casing ».

Les dimensions d'un bloc réfractaire latéral 18 sont variables. Elles sont classiquement supérieures à 75 x 300 x 300 mm³ et peuvent atteindre 120 x 600 x 1500 mm³.

Les blocs latéraux 18 sont typiquement jointoyés avec un ciment réfractaire 21 disposé entre eux et contre l'enveloppe métallique 20. La cuve 12 comporte au moins une anode 22 et au moins une cathode 24. Les anodes 22 et cathodes 24 sont disposées de manière à être en contact avec le bain de métal fondu, la cathode 24 étant classiquement disposée à proximité du fond 16.

Sous l'effet de la mise sous tension électrique des électrodes 22 et 24, une réaction d'électrolyse se produit dans le bain 10. Il en résulte la formation d'un bain d'aluminium dans la cuve se déposant sur la cathode.

Le passage du courant électrique, de forte intensité, au travers du bain 10 produit également par effet Joule un dégagement de chaleur. L'évacuation de cette chaleur à travers la paroi 14 de la cuve 12 entraîne le dépôt d'une couche 26 de cryolithe solidifiée sur la surface intérieure 27 des blocs latéraux 18. Cette couche est appelée « auto garnissage ».

Les blocs latéraux 18 doivent assurer la protection de l'enveloppe métallique 20. Ils sont souvent exposés à des environnements corrosifs (métal liquide à très haute température, cryolithe en fusion en partie inférieure, gaz corrosifs en partie supérieure) et soumis à de hautes températures et des contraintes thermiques et mécaniques importantes.

Par ailleurs, les blocs latéraux 18 sont classiquement conçus pour permettre une évacuation suffisante de la chaleur pour assurer la stabilisation en température du bain en fusion 10. En particulier, il faut éviter d'atteindre des températures au delà desquelles la couche d'auto garnissage 26 de cryolithe solidifiée redeviendrait liquide et contribuerait à une corrosion très rapide des cotés de cuve.

US 3 607 685, US 4 647 357 et US 4 737 254 décrivent des blocs latéraux à base d'alumine. Ces documents ne précisent pas la quantité de Na₂O contenue dans les sources d'alumine utilisées, ni la porosité ouverte de ces blocs.

GB 1,007,864 décrit des blocs latéraux en alumine mais ne précise pas la teneur en alumine bêta.

Pour limiter la consommation d'énergie, des blocs latéraux en forme de plaques céramiques isolées thermiquement en face arrière aptes à résister à la corrosion par le bain d'électrolyte ont été décrits, par exemple dans US 5 560 809. La faisabilité de grandes plaques à une échelle industrielle à un cout acceptable et la maitrise des joints entre ces plaques à base de carbure de silicium, de nitrure de silicium et de carbure de bore, ont cependant limité leur développement commercial.

Il existe un besoin pour de nouvelles solutions pour limiter la consommation énergétique lors de la production d'aluminium par électrolyse.

Un but de l'invention est de satisfaire, au moins partiellement, ce besoin.

### RESUME DE L'INVENTION

On atteint ce but au moyen d'une cuve d'électrolyse pour la production d'aluminium par réduction d'alumine, selon la revendication 1 ladite cuve contenant un bain d'électrolyte, notamment cryolithique, et comportant une paroi latérale comprenant au moins un bloc latéral, ledit bloc latéral, ci-après « bloc selon l'invention », comportant un matériau alumineux présentant
- une porosité ouverte inférieure à 10%, et
- une composition, en pourcentage massique sur la base du matériau alumineux et pour un total de 100%, telle que :
   - Al₂O₃ > 50% l'alumine bêta représentant moins de 20% de la masse du matériau alumineux,
   - oxdes moins réductibles que l'alumine à 1000°C : < 46%,
   - Na₂O < 3,9%,
   - autres constituants < 5%.

Les oxydes moins réductibles que l'alumine à 1000°C, Na₂O, et les «autres constituants » sont chacun optionnels, mais globalement, ils permettent de définir le complément à 100% de l'alumine.

De façon surprenante, les inventeurs ont découvert qu'en sélectionnant un matériau alumineux garantissant une faible teneur en Na₂O, le bloc latéral est parfaitement bien adapté aux cellules d'électrolyse de l'aluminium, en particulier lorsqu'il est en contact avec le bain d'électrolyte. La couche d'autogarnissage n'est donc plus indispensable et la paroi latérale de la cuve peut être isolée thermiquement.

Cette découverte est d'autant plus surprenante que la teneur en alumine du matériau alumineux est élevée et que le bain de cryolithe est prévu pour dissoudre l'alumine.

De façon surprenante, les inventeurs ont également découvert que le matériau alumineux selon l'invention résiste bien à un bain d'électrolyte très acide, ce qui permet d'exploiter la cuve à une température réduite.

Une cuve selon l'invention peut encore notamment présenter une ou plusieurs des caractéristiques optionnelles suivantes :
- Le bain d'électrolyte comporte du AlF₃ et au moins un fluorure alcalin NaF ou KF tel que le rapport molaire (NaF+KF)/AlF₃ est inférieur à 3, de préférence inférieur à 2, de manière plus préférée inférieur à 1,6. Le bain peut comporter d'autres fluorures tels que LiF ; MgF₂ ; CaF₂.
- Le bain d'électrolyte comporte une teneur molaire en AlF₃ supérieure à 30%.
- Le bain d'électrolyte comporte une teneur molaire en AlF₃ supérieure à 37%.
- Le bloc latéral présente une épaisseur minimale supérieure à 40 mm et/ou une porosité totale inférieure à 10%.
- La composition du matériau alumineux est telle que :
   - Al₂O₃ + MgO + CaO > 70%, voire Al₂O₃ + MgO + CaO > 95%, et/ou
   - Al₂O₃ > 92%, et/ou
   - Na₂O < 1%, voire Na₂O < 0,1%, et/ou
   - oxydes moins réductibles que l'alumine à 1000°C : < 10%, voire < 5%.
- Le matériau alumineux comporte au moins une phase cristallisée corindon et/ou spinelle de magnésium et/ou une phase hibonite (CaO.6Al₂O₃).
- Le matériau alumineux présente une teneur en alumine bêta inférieure à 20%, de préférence inférieure 15% en masse du matériau alumineux.
- La conductivité thermique du matériau alumineux à 600°C est inférieure à 10 W/m.K.
- La résistivité électrique du matériau alumineux à 700°C est supérieure à 2000 ohm.cm.
- La longueur et/ou la largeur et/ou l'épaisseur, de préférence toutes les dimensions hors tout du bloc latéral sont supérieures à 5 cm, de préférence supérieures à 10 cm, de préférence supérieures à 15 cm. La largeur est de préférence supérieure à 20 cm, voire supérieure à 30 cm, voire supérieure à 50 cm. La longueur est de préférence supérieure à 30 cm, voire supérieure à 50 cm ou encore supérieure à 60 cm ou même supérieure à 80 cm.

Un procédé de production d'aluminium par passage d'un courant électrique dans un bain d'électrolyte au moyen d'une cuve selon est décrit.

De préférence, en régime établi, c'est-à-dire après l'étape de démarrage,
- le matériau alumineux est en contact avec le bain d'électrolyte, c'est-à-dire que la cuve ne comporte pas de couche d'autogarnissage, et/ou
- le bain d'électrolyte est à une température inférieure à 950°C, et/ou
- le bain d'électrolyte est traversé par un courant électrique présentant une intensité supérieure à 200KA.

Un procédé de purification et en particulier de raffinage électrolytique d'aluminium par passage d'un courant électrique dans un bain d'électrolyte au moyen d'une cuve selon est décrit. Un exemple de procédé de purification, dit « à trois couches », pouvant mettre en oeuvre une cuve selon l'invention, est le procédé développé par R. Gadeau décrit dans la publication « the development of 85KA three layer electrolysis cell for refining of aluminium », light metals TMS, The Mineral, Metals and Material Society, 2008. US 4,552,637, US 3,386,908 et FR 759,588 décrivent d'autres exemples de procédés de purification d'aluminium dans lesquels une cuve selon l'invention peut être mise en oeuvre.

La cuve selon l'invention est particulièrement adaptée pour être mise en oeuvre dans le procédé de purification décrit précédemment en ce sens qu'elle présente une paroi comportant un bloc en matériau alumineux présentant avantageusement :
- une très bonne résistance à la corrosion par le bain d'électrolyte dont la composition particulière est nécessaire à la purification de l'aluminium,
- une réduction du risque de contamination de l'aluminium purifié, d'autant plus que la teneur en oxydes plus réductibles que l'aluminium du matériau alumineux constitutif du bloc de la paroi latérale est très faible, de préférence inférieure à 2%, voire inférieure à 1%, voire inférieure à 0,5% ou même inférieure à 0,2%, en pourcentage massique, et
- une résistivité électrique particulièrement élevée, notamment si la teneur dudit matériau alumineux en alumine bêta est inférieure à 20% en pourcentage massique.

### DEFINITIONS

La « taille » des particules d'un ensemble de particules est donnée classiquement par une caractérisation de distribution granulométrique, par exemple au moyen d'un granulomètre laser. On appelle « taille médiane » d'un ensemble de particules, le percentile D₅₀, c'est-à-dire la taille divisant les particules en première et deuxième populations égales en masse, ces première et deuxième populations ne comportant que des particules présentant une taille supérieure ou égale, ou inférieure respectivement, à la taille médiane.

La porosité ouverte est mesurée selon la norme ISO5017.

Les teneurs massiques en oxydes, en particulier Al₂O₃, Na₂O, MgO, CaO, SiO₂, ZrO₂, peuvent être mesurées par les techniques conventionnelles de chimie, notamment par fluorescence X.

La « réductibilité » à 1000°C d'un oxyde par rapport à celle de l'alumine peut être évaluée au moyen des diagrammes bien connus d'Ellingham-Richardson, tels que par exemple décrits dans le « Pocket Manual Refractory Materials » de G. Routschka, édition Vulkan-Verlag Essen 1997, pages 326-327.

Les teneurs en oxydes se rapportent aux teneurs globales pour chacun des éléments chimiques correspondants, exprimées sous la forme de l'oxyde le plus stable, selon la convention habituelle de l'industrie.

Dans un souci de clarté, on utilise les termes « Al₂O₃ », « MgO » et « SiO₂ » pour désigner les teneurs de ces oxydes dans la composition, et « alumine alpha » ou « alumine bêta », « magnésie libre » et « silice libre » pour désigner des phases cristallisées de ces oxydes constituées de Al₂O₃, de MgO et de SiO₂ respectivement.

Ces oxydes peuvent cependant être également présents sous d'autres phases, en particulier sous forme de spinelle ou d'hibonite.

On entend par « bain cryolithique » un bain majoritairement à base de sels de fluorures définis dans le système NaF-AlF₃. De préférence, le bain cryolithique comporte, en pourcentage massique sur la base de la masse totale du bain, au moins 50% de sels de fluorures définis dans ledit système. De préférence encore, un bain cryolithique comporte une teneur en sels de chlorures inférieure à 10%, de préférence inférieure à 5%, voire inférieure à 1%, exprimé en pourcentage massique élémentaire Cl, sur la base de la masse totale du bain. La cryolithe Na₃AlF₆ est un des composés définis dans ce système. Comme cela est indiqué dans l'ouvrage « Sels fondus à haute température » de Véronique Ghetta, Jacques Fouletier et Pierre Taxil, aux presses polytechniques et universitaires romandes, chapitre 8, des additifs comme notamment LiF, CaF₂, ou KF peuvent être ajoutés afin de diminuer la température du bain.

On entend par « bain potassique » un bain majoritairement à base de sels de fluorures définis dans le système KF-AlF₃. De préférence, le bain potassique comporte, en pourcentage massique sur la base de la masse totale du bain, au moins 50% de sels de fluorures définis dans ledit système. De préférence encore, un bain potassique comporte une teneur en sels de chlorures inférieure à 10%, de préférence inférieure à 5% voire inférieure à 1%, exprimé en pourcentage massique élémentaire Cl, sur la base de la masse totale du bain. De tels bains sont par exemple décrits par V. Danielik dans l'article « Phase equilibria in the system KF-AlF3-Al2O3 », Chempap. 59(2) 81-84 (2005). Comme cela est précisé dans l'ouvrage « Sels fondus à haute température » cité précédemment l'intérêt principal des bains potassiques est qu'ils permettent d'obtenir des mélanges à bas point de fusion présentant, à température équivalente, une solubilité de l'alumine supérieure à celle des bains dits « cryolithiques ».

Les teneurs massiques des phases d'oxydes cristallisées, en particulier des phases cristallisées d'alumine bêta, alumine alpha, magnésie libre, silice libre, spinelle, hibonite ou d'autres aluminates de Calcium sous forme cristallisée, peuvent être mesurées par diffraction des rayons X.

La teneur en CaO sous forme non cristallisée peut être déterminée par différence entre la teneur totale en Ca exprimée sous forme de CaO et la teneur en Ca présente dans les phases cristallisées, exprimée sous forme de CaO.

Tous les pourcentages de la présente description sont des pourcentages en masse par rapport à la masse totale du matériau alumineux, sauf indication contraire.

Par « contenant un », « comprenant un » ou « comportant un », on entend « comportant au moins un », sauf indication contraire.

### BREVE DESCRIPTION DES FIGURES

D'autres caractéristiques et avantages de la présente invention apparaîtront encore à la lecture de la description qui va suivre et à l'examen du dessin annexé dans lequel la figure 1 représente schématiquement une cuve d'électrolyse en coupe transversale selon un plan sensiblement médian.

### DESCRIPTION DETAILLEE

### Procédé

Le bloc latéral peut être fritté ou fondu.

Les procédés de fabrication de blocs fondus sont bien connus et comportent classiquement les étapes successives suivantes :
a) préparation d'une charge de départ
b) fusion de ladite charge de départ jusqu' à obtention d'une matière en fusion,
c) coulage et solidification de ladite matière en fusion, par refroidissement, de manière à obtenir un bloc fondu.

A l'étape a), la composition de la charge de départ est adaptée de manière que le bloc fondu puisse être un bloc selon l'invention.

On ajoute de préférence systématiquement et méthodiquement les oxydes pour lesquels une teneur spécifiée est nécessaire, notamment l'alumine, la magnésie ou la chaux, ou des précurseurs de ces oxydes, ou des combinaisons de ces oxydes. Par exemple on peut ajouter du ciment (aluminate de chaux). Les éléments Mg, Ca et Al peuvent être apportés sous forme carbonate ou hydroxyde, voire borate ou borure, voire fluorure pour les ajouts en plus faible quantité. Il est aussi possible d'ajouter directement au mélange du spinelle de magnésium (MgAl₂O₄) ou de l'hibonite.

A l'étape b), la fusion est de préférence réalisée grâce à l'action combinée d'un arc électrique assez long, ne produisant pas de réduction et d'un brassage favorisant la réoxydation. Le réglage en arc court ou moyen est aussi utilisable.

Afin de minimiser la formation de fentes ou de fendillements dans le bloc final, il est préférable d'opérer la fusion dans des conditions oxydantes. Préférentiellement, on utilise la fusion à l'arc long décrit dans le brevet français n°1208577 et ses additions n°75893 et 82310.

Ce procédé consiste à utiliser un four à arc électrique dont l'arc jaillit entre la charge et au moins une électrode écartée de cette charge et à régler la longueur d'arc pour que son action réductrice soit réduite au minimum, tout en maintenant une atmosphère oxydante.

De préférence à l'étape de coulée c), la température est supérieure à 1900°C, de préférence supérieure à 2000°C.

A l'étape c), plusieurs voies sont possibles :
- le coulage dans un moule calé ou placé a posteriori dans un caisson contenant un isolant granulaire. Le procédé est dit « sans transfert ». Le refroidissement est alors passif.
- le coulage dans un moule qui est ouvert très rapidement pour extraire la pièce. Le procédé est dit « avec transfert ». La pièce est introduite, soit dans un caisson contenant un isolant conduisant ainsi à un refroidissement passif, soit dans un four de recuisson. Dans cette dernière technologie, le refroidissement est contrôlé, de préférence de manière à être effectué à une vitesse inférieure à 20°C/heure, de préférence à la vitesse d'environ 10°C/ heure.

Les blocs fondus présentent l'avantage d'être recyclables. En particulier, les blocs fondus usagés, après broyage et classification éventuelles, peuvent être introduits dans la charge de départ à l'étape a) d'un procédé selon l'invention.

Les procédés de fabrication de blocs frittés sont bien connus et comportent classiquement les étapes successives suivantes :
a') préparation d'une charge de départ,
b') mise en forme de ladite charge de départ dans un moule,
c') compaction de ladite charge de départ à l'intérieur du moule de manière à former une préforme, de manière à obtenir une densité supérieure à 50%, de préférence supérieure à 60%, et inférieure à 80% de la densité théorique du mélange minéral constituant la préforme,
d') démoulage de ladite préforme,
e') séchage de ladite préforme, de préférence sous air ou atmosphère contrôlée en humidité,
f') cuisson de ladite préforme sous atmosphère de préférence oxydante, en particulier sous air, à une température comprise entre 1200°C à 1800°C, de préférence entre 1300°C et 1650°C, voire entre 1500°C et 1650°C, de manière à obtenir un bloc fritté.

Selon l'invention, la composition de la charge de départ est adaptée de manière que le bloc fritté puisse être un bloc selon l'invention.

A l'étape a'), un mélange particulaire est classiquement mélangé à un liant.

Le mélange particulaire présente de préférence une distribution granulométrique massique comportant deux pics principaux centrés autour d'une taille inférieure à 50 µm et d'une taille comprise entre 50 microns et 5 mm, de préférence 50 microns et 1 mm, de manière plus préférée entre 50 microns et 500 microns, respectivement. De préférence, le premier pic est plus élevé que le second.

Avantageusement, cette distribution granulométrique permet de conférer une cohésion optimale au bloc fabriqué et de favoriser le frittage et optimiser les propriétés du bloc.

Selon un mode préféré, le mélange particulaire présente une taille médiane de particules inférieure à 50 microns.

La fonction du liant est de former avec le mélange particulaire une masse suffisamment rigide pour conserver sa forme jusqu'au frittage de l'étape f'). Le choix du liant est dépendant de la forme souhaitée. Grâce au liant, la masse peut avantageusement prendre la forme d'une couche d'épaisseur variable, apte à suivre la paroi du moule, pour former des blocs.

Tout liant connu ou mélange de liants connus peut être utilisé. Les liants sont de préférence « temporaires », c'est-à-dire qu'ils sont éliminés en tout ou en partie lors des étapes de séchage et de cuisson du bloc. De préférence encore, au moins un des liants temporaires est une solution de dérivés d'amidon modifié, une solution aqueuse de dextrine ou de dérivés de la lignone, une solution d'un agent de synthèse tel que l'alcool de polyvinyle, une résine phénolique ou une autre résine de type époxy, un alcool furfurylique, ou un mélange de ceux-ci. De préférence encore, la quantité du liant temporaire est comprise entre 0,5 et 7 % en masse par rapport à la masse du mélange particulaire de la charge.

Des additifs de pressage classiquement utilisés pour la fabrication de blocs frittés peuvent être ajoutés au mélange particulaire et au liant. Ces additifs comprennent des plastifiants, par exemple des celluloses, des amidons modifiés ou des polyéthylènes glycol et des lubrifiants, par exemple des huiles solubles ou dérivés de stéarates. Les quantités de ces additifs sont celles classiquement mises en oeuvre lors de la fabrication de blocs réfractaires.

Le mélange de la charge est poursuivi jusqu'à obtention d'une masse sensiblement homogène.

A l'étape b'), la charge est mise en forme et disposée dans un moule.

A l'étape suivante de compaction ou « pressage » c'), le contenu du moule subit une compression par application d'une force sur la charge apte à la transformer en une préforme susceptible d'être frittée. Une pression comprise entre 500 et 5000 bar, de préférence entre 1000 et 3000 bar, est appropriée. Le pressage est de préférence effectué de manière isostatique, par exemple au moyen d'une presse hydraulique. Il peut être avantageusement précédé d'une opération de damage manuel ou pneumatique et/ou de vibration. La compaction permet avantageusement de réduire la porosité ouverte.

La préforme est ensuite démoulée (étape d')), puis mise à sécher (étape e')). Le séchage peut être effectué à une température modérément élevée. De préférence, il est effectué à une température comprise entre 110 et 200°C. Il dure classiquement entre 10 heures et une semaine selon le format de la préforme, jusqu'à ce que l'humidité résiduelle de la préforme soit inférieure à 0,5 %.

La préforme séchée est alors mise à cuire (étape f')). La durée de la cuisson, comprise entre 3 et 15 jours environ de froid à froid, est variable en fonction des matériaux mais aussi de la taille et la forme du bloc. Le cycle de cuisson est de préférence effectué sous air, de préférence à une température comprise entre 1400°C et 2000°C, de préférence entre 1500°C et 1800°C. Une température de frittage élevée permet avantageusement de réduire la porosité ouverte.

### Bloc

Un bloc selon l'invention peut présenter des dimensions et une forme quelconque. Un bloc selon l'invention est de préférence parallélépipédique. Dans un plan de coupe, sa forme peut être un trapézoïdale.

Un bloc selon l'invention peut présenter des faces concaves ou convexes, notamment une surface conique, cylindrique ou en forme de cornière.

L'épaisseur minimale, de préférence l'épaisseur moyenne d'un bloc selon l'invention est de préférence supérieure à 40 mm, supérieure à 60 mm, voire supérieure à 70 mm, ou même supérieure à 100 mm. Un bloc selon l'invention peut en effet avantageusement servir pour l'isolation thermique de la cuve d'électrolyse.

La porosité totale de l'ensemble d'un bloc selon l'invention est de préférence inférieure à 40%, de préférence inférieure à 20%, voire inférieure à 10%, voire inférieure à 5% ou même inférieure à 1%.

L'homme du métier sait paramétrer les procédés ci-dessus pour atteindre une telle porosité totale.

Dans un mode de réalisation, le matériau alumineux représente moins de 20% de la masse d'un bloc selon l'invention. Le matériau alumineux peut être une couche superficielle d'un bloc selon l'invention, ladite couche pouvant définir tout ou partie de la surface extérieure du bloc. De préférence, la couche superficielle en matériau alumineux définit au moins la portion de la surface extérieure du bloc destinée à entrer en contact avec le bain d'électrolyte.

L'épaisseur minimale, voire l'épaisseur moyenne de la couche superficielle en matériau alumineux peut être supérieure à 1 mm, supérieure à 10 mm, voire supérieure à 25 mm.

Le matériau alumineux peut également représenter plus de 25%, plus de 50%, voire plus 75%, plus de 90%, voire sensiblement 100% de la masse d'un bloc selon l'invention.

La porosité ouverte du matériau alumineux doit être inférieure à 10%, de préférence inférieure à 7%, de préférence inférieure à 5%. L'homme du métier sait paramétrer les procédés ci-dessus pour atteindre une telle porosité ouverte.

Dans le cas de la fabrication d'un bloc fritté, il peut par exemple modifier la courbe granulométrique du mélange particulaire de la charge de départ ou le cycle de frittage. Il peut aussi modifier la courbe température / temps de frittage.

En particulier, les modèles de compaction d'Andréasen ou de Fuller-Bolomey peuvent être utilisés pour modifier la densité apparente des produits frittés. De tels modèles de compaction sont notamment décrits dans l'ouvrage intitulé « Traité de céramiques et matériaux minéraux », C.A. Jouenne, Editions Septima. Paris (1984), pages 403 à 405.

Pour la fabrication d'un bloc fondu, il peut ajouter dans la charge de départ des agents formant un composé intermédiaire à bas point de fusion, notamment par exemple des fluorures ou des carbures ou des oxydes de métaux alcalins. Il peut également controler la courbe tempérautrue / temps de recuisson.

De préférence, les oxydes représentent plus de 98 %, plus de 99 %, voire sensiblement 100 % de la masse du matériau alumineux.

De préférence, Al₂O₃ > 75%, voire Al₂O₃ > 85%, voire Al₂O₃ > 92% ou même Al₂O₃ > 98%, en pourcentage massique sur la base du matériau alumineux.

L'utilisation d'un bloc à base d'alumine limite avantageusement la contamination du bain d'électrolyte lors de l'usure du bloc.

De préférence, le matériau alumineux comporte plus de 50%, voire plus de 75% d'alumine alpha ou corindon, en pourcentage massique sur la base du matériau alumineux.

De préférence, la teneur en alumine bêta est inférieure à 15%, voire inférieure à 10% ou inférieure à 5%, en pourcentage massique sur la base du matériau alumineux. Les inventeurs ont en effet observé qu'une teneur faible en alumine bêta permet d'obtenir un bloc présentant une forte résistance à la corrosion et une résistivité électrique élevée. En outre, une teneur en alumine bêta faible facilite le recyclage des blocs usagés.

De préférence, plus de 80%, de préférence plus de 90%, voire plus de 95% en masse de l'aluminium est présent sous une des formes suivantes : alumine alpha et alumine bêta.

De préférence, plus de 80%, de préférence plus de 90%, voire plus de 95% en masse de l'aluminium est présent sous une des formes suivantes : alumine alpha, alumine bêta, hibonite et spinelle.

Le procédé de fabrication du bloc est de préférence adapté pour éviter le développement d'une phase d'alumine bêta élevée, et en particulier pour éviter une teneur en alumine bêta supérieure à 20 %. Notamment, l'homme du métier peut choisir des matières premières présentant une faible teneur en Na₂O disponible pour la formation d'alumine bêta lors de la fabrication du bloc. Il peut aussi réduire la réaction entre l'alumine et Na₂O en contrôlant la teneur en silice SiO₂ de manière à obtenir une phase vitreuse sodosilicatée, une telle réaction pouvant conduire à la formation d'alumine bêta en dessous de 1300°C. De préférence, la teneur en SiO₂ dans le matériau alumineux devrait cependant être limitée à moins de 2%, voire à moins de 1,5%. L'homme du métier peut aussi ajouter des additifs favorisant la vaporisation de Na₂O. L'homme du métier peut enfin recuire le produit après fusion ou frittage, de préférence à une température supérieure à 1500°C afin d'éliminer, au moins en partie, Na₂O et favoriser la formation d'alumine alpha.

Toutes ces techniques pour limiter la teneur en alumine bêta sont bien connues.

Les oxydes moins réductibles que l'alumine à 1000°C peuvent représenter plus de 0,1% et/ou moins de 20%, moins de 10%, moins de 5%, moins de 3%, en pourcentage massique sur la base du matériau alumineux.

De préférence, la teneur en oxydes moins réductibles que l'alumine à 1000°C et autres que CaO et MgO est inférieure à 5%, de préférence inférieure à 2%, de préférence inférieure à 1%.

De préférence, les oxydes moins réductibles que l'alumine à 1000°C sont constitués, pour plus de 90%, plus de 95%, voire sensiblement 100% de leur masse par CaO et/ou MgO et/ou ZrO₂.

De préférence encore, les oxydes moins réductibles que l'alumine à 1000°C sont constitués, pour plus de 90%, plus de 95%, voire sensiblement 100% de leur masse par CaO et/ou MgO.

De préférence, Al₂O₃ + MgO + CaO > 70%, de préférence Al₂O₃ + MgO + CaO > 80%, de préférence Al₂O₃ + MgO + CaO > 90%, de préférence Al₂O₃ + MgO + CaO > 95%, de préférence Al₂O₃ + MgO + CaO > 97%.

De préférence, MgO < 40%, de préférence MgO < 38%.

Dans un mode de réalisation, MgO > 28%, de préférence MgO > 32%.

MgO peut en particulier se présenter sous la forme de magnésie non sous forme de spinelle, et en particulier sous forme cristallisée de periclase ou sous forme non cristallisée. De préférence, la teneur en magnésie non cristallisée sous forme de spinelle est inférieure à 25%, de préférence inférieure à 16%. La contamination éventuelle du bain d'électrolyte en est avantageusement réduite.

De préférence, plus de 80%, de préférence plus de 90%, voire plus de 95% en masse du magnésium est présent sous une des formes suivantes : périclase, magnésie non cristallisée et spinelle.

De préférence, CaO < 15%, de préférence CaO < 10%, de préférence CaO < 8%.

Dans un mode de réalisation, CaO > 1%, de préférence CaO > 1,5 %.

De préférence, CaO est présent, pour plus de 90% de sa masse, sous la forme d'hibonite CaO(Al₂O₃)₆.

La teneur en chaux non cristallisée sous forme hibonite, par exemple sous forme d'autres aluminates de calcium comme CaO.2Al₂O₃, ou sous forme non cristallisée, est de préférence inférieure à 25%, de manière encore plus préférée inférieure à 16%, en pourcentage en masse sur la base du matériau alumineux. La contamination éventuelle du bain d'électrolyte en est avantageusement réduite.

Parmi les oxydes plus réductibles que l'alumine à 1000°C, et donc à considérer parmi les « autres constituants », figurent aussi les oxydes de cuivre, d'étain, de bore, de phosphore, de chrome et de zinc. De préférence, la teneur totale en oxydes de cuivre, d'étain, de bore, de phosphore et de zinc est inférieure à 2%. De préférence, la teneur totale en oxydes de cuivre, d'étain, de bore, de phosphore, de chrome et de zinc est inférieure à 2%. Plus particulièrement, la teneur en phosphore est de préférence inférieure à 1%, de manière plus préférée inférieure à 0,5% ou même inférieure à 0,2%. De préférence, le produit ne comporte pas de phosphate. Pour une application mettant en oeuvre un procédé de purification d'aluminium par passage d'un courant électrique dans le bain d'électrolyte selon l'invention, la teneur totale en oxydes d'étain, de bore, de phosphore, de fer, de titane, de chrome et de zinc est de préférence inférieure à 2%, voire inférieure 1%, de manière plus préférée inférieure à 0,5% ou même inférieure à 0,2%.

Classiquement, Na₂O est une impureté des sources d'alumine. Les inventeurs ont découvert que limiter la teneur en Na₂O, en particulier en choisissant des sources d'alumine très pures, permet d'améliorer considérablement les performances du bloc.

De préférence Na₂O < 3,5%, de préférence Na₂O < 3%, de préférence Na₂O < 2%, de préférence Na₂O < 1%, de préférence Na₂O < 0,5%, de préférence Na₂O < 0,3%, de préférence Na₂O < 0,1%. Les sources d'alumine sont déterminées à cet effet. Dans un mode de réalisation, il est préférable que Na₂O > 0,2%, de préférence Na₂O > 0,3%.

De préférence, plus de 80%, de préférence plus de 90%, voire plus de 95% en masse du sodium est présent sous une des formes suivantes : phase silicatée de soude et alumine bêta.

De préférence, la teneur totale en « autres constituants » est inférieure à 4,5%, inférieure à 4%, inférieure à 3%, inférieure à 2%, de préférence inférieure à 1%.

De préférence, SiO₂ < 1,5%, de préférence SiO₂ < 1,0%, de préférence SiO₂ < 0,5%. De préférence, la teneur en silice libre (c'est-à-dire non liée sous forme d'une autre phase, par exemple sous forme de mullite 3(Al₂O₃)2SiO₂) est inférieure à 1%, de préférence inférieure à 0,5%. La sensibilité du matériau alumineux au bain d'électrolyte en est avantageusement réduite.

La conductivité thermique du matériau alumineux à 600°C est de préférence supérieure à 3W/m.K, et/ou inférieure à 15W/m.K, de préférence inférieure à 10 W/m.K, de préférence inférieure à 8 W/m.K. Une faible conductivité thermique rend avantageusement le bloc selon l'invention bien adapté pour améliorer l'isolation thermique, et donc le rendement énergétique de la cuve.

La résistivité électrique du matériau alumineux à 700°C est de préférence supérieure à 1000 ohm.cm, de préférence supérieure à 2000 ohm.cm, de préférence supérieure à 2500 ohm.cm. Une résistivité électrique élevée permet avantageusement de limiter les pertes de courant et d'améliorer le rendement électrique.

### Cuve

La paroi latérale de la cuve d'électrolyse comporte classiquement une pluralité de blocs assemblés. De préférence, tous les blocs formant la paroi latérale d'une cuve selon l'invention sont des blocs selon l'invention. De préférence, la surface intérieure de la paroi latérale, qui définit le volume intérieur de la cuve et est en contact du bain d'électrolyte, est définie par des blocs latéraux selon l'invention. De préférence, les blocs sont montés sans joint de ciment entre eux. Les blocs peuvent comporter des décrochements ou feuillures, voire des gorges et cordons, pour améliorer l'étanchéité et réduire les risques de fuite de métal ou de bain cryolithique entre les blocs ainsi agencés. La cuve d'électrolyse contient un bain d'électrolyte.

Selon un mode de réalisation, le bain d'électrolyte est un bain cryolithique ou un bain potassique. Il n'est pas exclu que le bain d'électrolyte contienne de l'Elpasolithe (K₂NaAlF₆).

De préférence, le matériau alumineux des blocs selon l'invention est en contact avec le bain d'électrolyte.

Dans un mode de réalisation préféré, la cuve ne comporte pas de couche d'autogarnissage. Avantageusement, la cuve peut être isolée thermiquement et son rendement énergétique ainsi amélioré.

Dans un mode de réalisation, le bain d'électrolyte comporte, de préférence pour plus de 20% de sa masse, un sel de fluorure, de préférence du AlF₃ et/ou un fluorure alcalin, en particulier NaF ou KF.

De préférence, le bain d'électrolyte comporte du AlF₃ et au moins un fluorure alcalin NaF et/ou KF tel que le rapport molaire (NaF+KF)/AlF₃ est inférieur à 3, de préférence inférieur à 2, de manière plus préférée inférieur à 1,6. Le bain peut comporter d'autres fluorures tels que LiF ; MgF₂ ; CaF₂. De préférence le bain comporte une teneur molaire en AlF₃ supérieure à 30%, de préférence supérieure à 35%, de préférence supérieure à 37%, et/ou inférieure à 50%, de préférence inférieure à 47%.

Une haute teneur AlF₃ permet avantageusement d'acidifier le bain d'électrolyte et autorise une électrolyse à des températures réduites.

Dans un mode de réalisation, la température du bain d'électrolyte est inférieure à 950°C, de préférence inférieure à 930°C, et/ou supérieure à 800°C.

Dans un mode de réalisation, un courant électrique présentant une intensité supérieure à 100KA, voire supérieure à 200KA traverse le bain d'électrolyte.

Dans un mode de réalisation, la cuve comporte un matériau isolant disposé de manière à limiter les pertes calorifiques à travers ledit bloc latéral.

De préférence, ce matériau isolant est choisi dans le groupe formé par les produits alumineux ou silicoalumineux de conductivité thermique inférieure à 3W/m.K à 400°C, de préférence sous forme de pièces de forme, de pisé, de béton, de ciment ou même d'une mousse céramique.

Le matériau isolant peut se présenter sous la forme d'une couche présentant une épaisseur supérieure à 1 cm, voire supérieure à 5 cm, voire supérieure à 10 cm, ou même supérieure à 15 cm, selon le type de cuve. Cette couche est de préférence disposée à proximité, de préférence en contact avec le bloc latéral, de préférence en contact avec la surface du bloc latéral opposée à la surface du bloc latéral en contact avec le bain d'électrolyte.

### EXEMPLES

Les exemples suivants sont fournis à des fins illustratives et ne limitent pas l'invention.

Les exemples 1 à 4, 7* et 9* ont été fondus dans un four à arc à 2000°C, comme décrit ci-dessus, puis la matière en fusion a été coulée pour obtenir des blocs de dimensions 400*400*200mm³. Ces blocs ont été recuits.

Pour les exemples 5, 6 et 8*, les matières premières ont été mélangées dans un malaxeur de type Eirich. La charge de départ ainsi obtenue a été pressée de manière isostatique pour obtenir des préformes de dimensions 300*100*100mm³ dont la densité relative sur sec était supérieure à 95%. Le frittage a été effectué à 1500°C sous air. Le tableau 1 suivant indique les poudres utilisées comme matières premières :

**Tableau 1**

| Exemple | Matières premières (% massiques) |
|---|---|
| 1 | Alumine calcinée (D₅₀ d'environ 70 microns) + carbonate de soude (Na₂CO₃) + carbonate de lithium (Li₂CO₃) |
| 2 | Alumine calcinée (D₅₀ d'environ 70 microns) + silicate de sodium + carbonate de lithium (Li₂CO₃) |
| 3 | Alumine calcinée (D₅₀ d'environ 70 microns) + MgO + Na₂CO₃ + AlF₃ |
| 4 | 64% alumine calcinée (D₅₀ d'environ 70 microns) +35% magnésie MgO premier SKLS + 0,5% d'oxyde de cuivre pur CuO +0,5% AlF₃ +0,5% B₄C |
| 5 | 59% alumine calcinée (teneur Al₂O₃ supérieure ou égale à 99,5%, D₅₀ d'environ 0,5µm), 39% hibonite D₅₀ <10 microns, 2% PEG 2000 |
| 6 | 99% alumine calcinée (teneur Al₂O₃ supérieure ou égale à 99,5% ; D₅₀ environ 0,5µm) + 1% PVA |
| 7* | Alumine calcinée (D₅₀ d'environ 70 µm) + Na₂CO₃ |
| 8* | 80% corindon blanc (tailles des particules entre de 0,050 et 4mm, D₅₀ d'environ 1,2 mm, pureté > 99,5% en Al₂O₃) ; 15% alumine calcinée (teneur Al₂O₃ supérieure ou égale à 99,5% et D₅₀ d'environ 4µm), 4% alumine calcinée (teneur Al₂O₃ supérieure ou égale à 99,5% et D₅₀ d'environ 0,5µm) + 1% de dérivé amidon (agent de pressage) |
| 9* | 40% d'une poudre de grains de Jargal M, produit électrofondu fourni par la société SEPR, rebroyé sous forme tout venant inférieur à 15mm, et 60% d'alumine calcinée (teneur Al₂O₃ supérieure ou égale à 99,5% et D₅₀ d'environ 4 µm). |

L'analyse des phases a été réalisée par diffraction aux rayons X.

La porosité ouverte a été mesurée selon ISO5017 sur une éprouvette de dimension 25*25*150mm³ prélevée à coeur de bloc. La conductivité thermique et la résistivité électrique ont été mesurées respectivement selon les normes EN 99314 et ASTM D257 2007 sur éprouvettes taillées à coeur de bloc.

Les éprouvettes de test présentaient un diamètre de 50 mm et une épaisseur de 35 mm pour le test de conductivité thermique et un diamètre de 30 mm et une épaisseur de 30 mm pour le test de résistivité électrique.

Des tests de résistance à la corrosion au bain cryolithique permettent d'évaluer la résistance d'échantillons de formes cylindriques de diamètre 14 mm. Ces échantillons sont plongés et mis en rotation pendant 24 heures dans un bain de cryolithe. Un premier test (test 1) est réalisé à 1000°C avec un bain cryolithique ayant un excès d'AlF₃ de 11% en masse (ratio molaire NaF/AlF₃ = 2.2), un taux de CaF₂ de 5% en masse et un taux d'alumine Al₂O₃ de 8%. Un second test (test 2) est réalisé à 900°C avec un bain cryolithique ayant un excès d'AlF₃ de 25% en masse, un taux de CaF₂ de 4% et un taux d'alumine Al₂O₃ de 4%. Dans les deux cas, la température d'essai se situe environ 50°C au-dessus de la température de fusion théorique du bain et le taux d'alumine est voisin de la saturation. La mesure différentielle du diamètre des échantillons avant et après essai, ramenée au diamètre avant essai, permet de déterminer un indice de corrosion, en %. Plus cet indice est faible (en valeur absolue), plus la résistance à la cryolithe est importante.

**Tableau 2**

| **Exemple** | 1 | 2 | 3 | 4 | 5 | 6 | 7* | 8* | 9* |
|---|---|---|---|---|---|---|---|---|---|
| **composition chimique (exprimée sous forme d'oxydes élémentaires)** | | | | | | | | | |
| Na₂O % | 0,60% | 0,40% | 0,30% | 0,05% | 0,05% | 900 ppm | 4,00% | < 0,5% | 2,2% |
| Al₂O₃ % | 99,0% | 99,1% | 97,0% | 64,0% | 93,0% | 99,8% | 95,0% | 99,5% | 97,0% |
| SiO₂ % | 0,10% | 0,27% | 0,10% | 0,05% | 0,70% | 300 ppm | 0,50% | < 0,5 % | 0,5% |
| ZrO₂ % | <0,5% | <0,5% | <0,5% | <0,5% | <0,5% | <0,5% | <0,5% | <0,5% | <0,5% |
| MgO % | <0,1% | <0,1% | 2,50% | 35% | <0,1% | <0,1% | | < 0,25 % | <0,1% |
| CaO % | <0,1% | <0,1% | <0,1% | < 0,9% | 6% | <0,1% | | < 0,25% | <0,1% |

| Autres constituants | complément à 100% | | | | | | | | |
|---|---|---|---|---|---|---|---|---|---|
| **composition cristallographique déterminée par diffraction X** | | | | | | | | | |
| alumine alpha | 87% | 91% | 85% | ND | >18% | >98% | 47% | > 98% | >73% |
| alumine bêta | 12% | 8% | 6% | ND | < 2% | <2% | 53% | <2% | 25% |
| Spinelle | ND | ND | 8% | 90% | ND | ND | ND | ND | ND |
| Hibonite | ND | ND | ND | ND | 80% | ND | ND | ND | ND |
| MgO (periclase) | ND | ND | ND | 9-10% | ND | ND | ND | ND | ND |

| **autres caractéristiques physiques** | | | | | | | | | |
|---|---|---|---|---|---|---|---|---|---|
| porosité ouverte | 2% | 3% | 7% | 3% | 5% | 0,10% | 2% | 15% | 4,5% |
| conductivité thermique à 600°C (W/m.K) | 7,5 | 7 | 6 | 4,5 | NM | NM | 4,5 | 3 | NM |
| résistivité electrique à 700°C (Ohm.cm) | 2600 | 3000 | 3000 | 2700 | 3100 | 2800 | 100 | NM | 380 |

| **effet technique** | | | | | | | | | |
|---|---|---|---|---|---|---|---|---|---|
| Indice de corrosion test 1 | -26% | -30% | NM | NM | -18% | -14% | -50% | -40% | NM |
| Indice de corrosion test 2 | -2% | -3% | -4% | -6% | NM | -7% | -13% | NM | NM |

| | | | | | | | | | |
|---|---|---|---|---|---|---|---|---|---|
| * : exemple comparatif ND : non détectable ; NM : non déterminé | | | | | | | | | |

Les résultats aux tests de corrosion montrent que les matériaux selon l'invention présentent une résistance à la corrosion fortement améliorée par rapport aux exemples comparatifs.

De plus, les matériaux selon l'invention présentent une résistivité en température significativement plus élevée que les exemples comparatifs, ce qui est très favorable pour l'application comme bloc latéral d'une cuve d'électrolyse.

D'autres essais ont par ailleurs montré qu'un bloc selon l'invention présente une résistance à l'abrasion élevée, ce qui est particulièrement utile lorsque les intensités électriques sont supérieures à 200 KA, voire supérieures à 300 KA.

Comme cela apparaît clairement à présent, l'invention fournit un bloc réfractaire bien adapté pour servir comme bloc latéral d'une cuve d'électrolyse.

En particulier, ce bloc présente de bonnes performances en termes de :
- résistance à l'oxydation et à la corrosion par le bain d'électrolyte et ses vapeurs,
- résistance à l'abrasion, ce qui est particulièrement utile lorsque les intensités électriques sont supérieures à 200 KA, voire supérieures à 300 KA,
- conductivité thermique,
- contamination du bain d'électrolyte,
- résistivité électrique.

Ces performances permettent avantageusement de limiter la consommation énergétique lors de la production d'aluminium par électrolyse, tout en conservant une durée de vie élevée.

Bien entendu, la présente invention n'est pas limitée aux modes de réalisation décrits fournis à titre d'exemples illustratifs et non limitatifs.

## Revendications

1. Cuve d'électrolyse pour la production d'aluminium par réduction d'alumine, ladite cuve contenant un bain d'électrolyte et comportant une paroi latérale comprenant au moins un bloc latéral, ledit bloc latéral comportant un matériau alumineux présentant
- une porosité ouverte inférieure à 10%, et
- une composition, en pourcentage massique sur la base du matériau alumineux et pour un total de 100%, telle que :
- Al₂O₃ > 50%, l'alumine bêta représentant moins de 20% de la masse du matériau alumineux,
- oxydes moins réductibles que l'alumine à 1000°C : < 46%,
- Na₂O < 3,9%,
- autres constituants < 5%.

2. Cuve selon la revendication précédente, le bain d'électrolyte comportant du AlF₃ et au moins un fluorure alcalin NaF ou KF en un rapport molaire (NaF+KF)/AlF₃ inférieur à 3.

3. Cuve selon l'une quelconque des revendications précédentes, le bain d'électrolyte comportant une teneur molaire en AlF₃ supérieure à 30%.

4. Cuve selon l'une quelconque des revendications précédentes, le bain d'électrolyte comportant une teneur molaire en AlF₃ supérieure à 37%.

5. Cuve selon l'une quelconque des revendications précédentes, ledit bloc latéral présentant une épaisseur minimale supérieure à 40 mm, et/ou présentant une porosité totale inférieure à 5%.

6. Cuve selon l'une quelconque des revendications précédentes, la teneur en oxydes moins réductibles que l'alumine à 1000°C étant inférieure à 10%.

7. Cuve selon l'une quelconque des revendications précédentes, la teneur en oxydes moins réductibles que l'alumine à 1000°C étant inférieure à 5%.

8. Cuve selon l'une quelconque des revendications précédentes, ladite composition du matériau alumineux étant telle que: SiO₂ <1,5% et/ou telle que : Al₂O₃ + MgO + CaO > 70%.

9. Cuve selon la revendication précédente, ladite composition du matériau alumineux étant telle que : Al₂O₃ + MgO + CaO > 95%.

10. Cuve selon l'une quelconque des revendications précédentes, le matériau alumineux comportant au moins une phase cristallisée corindon et/ou spinelle de magnésium et/ou une phase hibonite (CaO.6Al₂O₃).

11. Cuve selon l'une quelconque des revendications précédentes, ladite composition du matériau alumineux étant telle que : Al₂O₃ > 92%.

12. Cuve selon l'une quelconque des revendications précédentes, la composition du matériau alumineux étant telle que : Na₂O < 3%, de préférence Na₂O < 2%.

13. Cuve selon l'une quelconque des revendications précédentes, ladite composition du matériau alumineux étant telle que : Na₂O < 1%.

14. Cuve selon la revendication précédente, ladite composition du matériau alumineux étant telle que : Na₂O < 0,1%.

15. Cuve selon l'une quelconque des revendications précédentes, le bain d'électrolyte étant un bain cryolithique ou un bain potassique, la température du bain d'électrolyte étant inférieure à 950°C et/ou supérieure à 800°C et ledit bloc latéral étant au contact du bain d'électrolyte et la cuve comportant un matériau isolant disposé de manière à limiter les pertes calorifiques à travers ledit bloc latéral.

## Patentansprüche

1. Elektrolysezelle für die Produktion von Aluminium durch Reduktion von Aluminiumoxyd, wobei die Zelle ein Elektrolytbad enthält und eine Seitenwand aufweist, welche wenigstens einen Seitenblock beinhaltet, wobei der Seitenblock ein aluminiumhaltiges Material aufweist mit:
- einer offenen Porosität, die kleiner ist als 10% ist und
- einer Zusammensetzung in Massenprozenten auf der Basis des aluminiumhaltigen Materials und für eine Gesamtheit von 100%, derart, dass:
- Al₂O₃ > 50% ist, wobei das Beta Aluminiumoxyd weniger als 20% der Masse des aluminiumhaltigen Materials darstellt,
- Oxyde, die weniger reduzierbar als Aluminiumoxyd bei 1000° C sind: < 46%
- Na₂O < 3,9%,
- andere Bestandteile < 5%.

2. Zelle nach dem vorhergehenden Anspruch, in welcher das Elektrolytbad AlF₃ enthält und wenigstens ein alkalisches Fluorid NaF oder KF in einem molaren Verhältnis (NaF+KF)/AlF₃ kleiner als 3.

3. Zelle nach einem der vorhergehenden Ansprüche, in welcher das Elektrolytbad einen molaren Gehalt an AlF₃ größer als 30% aufweist.

4. Zelle nach einem der vorhergehenden Ansprüche, in welcher das Elektrolytbad einen molaren Gehalt an AlF₃ größer als 37% aufweist.

5. Zelle nach einem der vorhergehenden Ansprüche, in welcher der Seitenblock eine minimale Dicke größer als 40 mm und/oder eine totale Porosität kleiner als 5% aufweist.

6. Zelle nach einem der vorhergehenden Ansprüche, in der der Gehalt an Oxyden die weniger reduzierbar sind als Aluminiumoxyd bei 1000°C kleiner als 10% ist.

7. Zelle nach einem der vorhergehenden Ansprüche, in welcher der Gehalt an Oxyden, die weniger reduzierbar sind als Aluminiumoxyd bei 1000°C kleiner als 5% ist.

8. Zelle nach einem der vorhergehenden Ansprüche, in welcher die Zusammensetzung des aluminiumhaltigen Materials derart ist, dass:
SiO₂ < 1,5% und/oder derart, dass: Al₂O₃+MgO+CaO > 70% ist.

9. Zelle nach dem vorhergehenden Anspruch, in welcher die Zusammensetzung des aluminiumhaltigen Materials derart ist, dass:
Al₂O₃+MgO+CaO > 95%.

10. Zelle nach einem der vorhergehenden Ansprüche, in welcher das aluminiumhaltige Material wenigstens eine kristallisierte Phase von Korund und/oder Spinell von Magnesium und/oder eine hibonitische Phase (CaO.6Al₂O₃) enthält.

11. Zelle nach einem der vorhergehenden Ansprüche, in welcher die Zusammensetzung des aluminiumhaltigen Materials derart ist, dass:
Al₂O₃ > 92%.

12. Zelle nach einem der vorhergehenden Ansprüche, in welcher die Zusammensetzung des aluminiumhaltigen Materials derart ist, dass:
Na₂O < 3%, vorzugsweise Na₂O < 2%.

13. Zelle nach einem der vorhergehenden Ansprüche, in welcher die Zusammensetzung des aluminiumhaltien Materials derart ist, dass:
Na₂O < 1%.

14. Zelle nach dem vorhergehenden Anspruch, in welcher die Zusammensetzung des aluminiumhaltigen Materials derart ist, dass:
Na₂O < 0,1 %

15. Zelle nach einem der vorhergehenden Ansprüche, in welcher das Elektrolytbad ein cryolithisches Bad oder ein kalisches Bad ist, wobei die Temperatur des Elektrolytbades kleiner als 950°C und/oder größer als 800°C ist und wobei der Seitenblock in Kontakt mit dem Elektrolytbad ist und die Zelle ein isolierendes Material aufweist, das so angeordnet ist, dass die Wärmeverluste durch den Seitenblock begrenzt sind.

## Claims

1. An electrolytic cell for the production of aluminum by
reduction of alumina, said cell containing an electrolyte bath and having a side wall that comprises at least one side block, said side block comprising an aluminous material having
- an open porosity of less than 10%, and
- a composition, as a weight percentage on the basis of the aluminous material and for a total of 100%, such that:
- Al₂O₃ > 50%, beta-alumina representing less than 20% of the weight of the aluminous material,
- oxides that are less reducible than alumina at 1000°C: < 46%,
- Na₂O < 3.9%,
- other constituents < 5%.

2. The cell as claimed in the preceding claim, the electrolyte bath comprising AlF₃ and at least one alkali metal fluoride NaF or KF at an (NaF+KF)/AlF₃ molar ratio of less than 3.

3. The cell as claimed in either one of the preceding claims, the electrolyte bath comprising a molar content of AlF₃ of greater than 30%.

4. The cell as claimed in any one of the preceding claims, the electrolyte bath comprising a molar content of AlF₃ of greater than 37%.

5. The cell as claimed in any one of the preceding claims, said side block having a minimum thickness of greater than 40 mm and/or having a total porosity of less than 5%.

6. The cell as claimed in any one of the preceding claims, the content of oxides that are less reducible than alumina at 1000°C being less than 10%.

7. The cell as claimed in any one of the preceding claims, the content of oxides that are less reducible than alumina at 1000°C being less than 5%.

8. The cell as claimed in any one of the preceding claims, said composition of the aluminous material being such that: SiO₂ <1.5% and/or such that: Al₂O₃ + MgO + CaO > 70%.

9. The cell as claimed in the preceding claim, said composition of the aluminous material being such that: Al₂O₃ + MgO + CaO > 95%.

10. The cell as claimed in any one of the preceding claims, the aluminous material comprising at least a corundum and/or magnesium spinel crystalline phase and/or a hibonite (CaO.6Al₂O₃) phase.

11. The cell as claimed in any one of the preceding claims, said composition of the aluminous material being such that: Al₂O₃ > 92%.

12. The cell as claimed in any one of the preceding claims, the composition of the aluminous material being such that: Na₂O < 3%, preferably Na₂O < 2%.

13. The cell as claimed in any one of the preceding claims, said composition of the aluminous material being such that: Na₂O < 1%.

14. The cell as claimed in the preceding claim, said composition of the aluminous material being such that: Na₂O < 0.1%.

15. The cell as claimed in any one of the preceding claims, the electrolyte bath being a cryolite bath or a potassium bath, the temperature of the electrolyte bath being below 950°C and/or above 800°C, and said side block being in contact with the electrolyte bath, and the cell comprising an insulating material placed so as to limit heat losses through said side block.
